Europäisches Patentamt

European Patent Office

Office européen des brevets

(11) Numéro de publication: **0 229 006 B1**

(12) **FASCICULE DE BREVET EUROPEEN**

(45) Date de publication de fascicule du brevet:
**29.01.92**

(21) Numéro de dépôt: **86870182.2**

(22) Date de dépôt: **04.12.86**

(51) Int. Cl.⁵: **G07F 7/10**

(54) **Procédé et appareil vérifiant l'authenticité de documents liés à une personne et l'identité de leurs porteurs.**

(30) Priorité: **11.12.85 LU 86203**

(43) Date de publication de la demande:
**15.07.87 Bulletin 87/29**

(45) Mention de la délivrance du brevet:
**29.01.92 Bulletin 92/05**

(84) Etats contractants désignés:
**AT BE CH DE ES FR GB GR IT LI NL SE**

(56) Documents cités:
**EP-A- 0 030 381       FR-A- 2 471 632**
**GB-A- 2 114 791       GB-A- 2 140 179**
**US-A- 3 956 615       US-A- 4 218 738**
**US-A- 4 405 829**

**IBM TECHNICAL DISCLOSURE BULLETIN, vol.
23, no. 11, avril 1981, pages 4990-4993, New
York, US; R.F. CANTOR et al.: "Off-line personal verification using a public-key algorithm"**

**IBM TECHNICAL DISCLOSURE BULLETIN, vol.
25, no. 5, octobre 1982, pages 2358-2360,
New York, US; R.F. LENNON et al.:
"Authentication with stored KP and dynamic
PAC"**

(73) Titulaire: **"Centre d'Etude de l'Energie Nucléaire", "C.E.N."
Avenue Plasky 144 Schaerbeek
B-1040 Bruxelles(BE)**

(72) Inventeur: **Musyck, Emile Paul Henri Jules
Amerikalaan 28
B-2440 Geel(BE)**
Inventeur: **Binard, Luc André Marie Ghislain
Boeretang 207
B-2400 Mol(BE)**
Inventeur: **Coupe, Bernard Georges Pierre
Ouai Saint Brice 7
B-7500 Tournai(BE)**

(74) Mandataire: **Callewaert, Jean et al
Bureau Gevers S.A. rue de Livourne 7 bte 1
B-1050 Bruxelles(BE)**

Rank Xerox (UK) Business Services

## Description

L'invention est relative à un procédé destiné à verifier l'authenticité d'un document associé à une personne, tel que carte de crédit, carte de banque, chèque, badge d'accès, etc..., ainsi que l'identité du détenteur ou porteur de ce document en faisant un traitement d'informations, à partir d au moins un message secret attestant l'identité du détenteur du document en vue de contrôler la correspondance entre ce document et le message.

L'usage de codes secrets s'est largement répandu dans les installations et les équipements dont l'accès ou l'utilisation doit être limité et lorsque l'usager doit être identifié de manière certaine. Les distributeurs automatiques de fonds et les équipements de paiements automatiques en sont une illustration.

Les appareillages actuellement en service vérifient que le numéro d'identification de la carte de banque lu par le lecteur et le code secret tapé sur le clavier par le porteur de cette carte ont bien la correspondance voulue. Ils réalisent cette vérification par un traitement mathématique utilisant une clef secrète. Cette manière de procéder présente divers inconvénients :

- Si l'appareil est conçu pour un fonctionnement "off-line", la clef secrète doit nécessairement être incorporée à chaque équipement et, dans ce cas, il suffit que des malfaiteurs se soient rendus maître d'un de ces équipements pour que la sécurité de tout le réseau soit mise en péril.
- Si la clef secrète est incorporée à un ordinateur central, un fonctionnement "on-line" est indispensable et, comme dans ce cas il est inconcevable de transmettre en clair le code secret dans le réseau de télécommunications, l'appareil doit nécessairement disposer aussi de clefs secrètes.
- Tous ces appareils nécessitent une protection physique importante à cause des clefs secrètes incorporées et sont ainsi relativement coûteux.
- Le code secret est imposé à l'usager et est de ce fait difficile à retenir.
- Comme le code secret est limité à 4 chiffres, les appareils de retraits de fond sont conçus de manière à mettre hors service toutes les cartes pour lesquelles trois essais infructueux consécutifs auraient été opérés.

Une opération de vérification ou d'identification a lieu habituellement lorsqu'un usager veut bénéficier d'une organisation, utiliser un équipement ou accéder à un réseau informatique. D'une manière générale elle consiste en une comparaison entre, d'une part, l'information secrète gardée par l'intéressé, telle que la forme d'une clef de serrure, le secret d'un coffre-fort, le mot de passe d'un ordinateur, etc... et, d'autre part, une référence, telle qu'une disposition ou une forme particulière de certaines pièces dans la serrure, dans le mécanisme d'ouverture du coffre-fort ou telle qu'un nombre particulier enfoui dans la mémoire de l'ordinateur. Dans les procédés et appareils connus tels que décrits dans le document FR-A-2 471 632 (ATALLA) cette référence ou ce qui en tient lieu doit nécessairement être tenu secrète ; ainsi lorsque la référence n'est pas directement présente mais qu'elle est calculée au moment de la vérification c'est alors l'algorithme du calcul ou la clef utilisée dans celui-ci qui doit être gardé secret.

En particulier, le document FR-A-2 471 632 (ATALLA) divulgue un procédé d'élaboration et de vérification d'une carte codée associée à une personne. Ce procédé consiste essentiellement à effectuer un chiffrement au moyen d'un algorithme irréversible à partir d'un message secret choisi par le futur détenteur et à partir d'autres informations telles que le numéro de compte, à chiffrer le premier code obtenu au moyen d'un algorithme utilisant une clef secrète et à porter sur la carte le deuxième code ainsi engendré.

Lors de l'utilisation ultérieure de la carte, la vérification est effectuée en introduisant les mêmes informations, en exécutant les mêmes chiffrements et en comparant le résultat obtenu au code indiqué sur la carte.

Un désavantage de ce procédé est donc que l'appareil de vérification utilisé sur place comporte des éléments (algorithmes ou clef) devant être gardés secrets pour éviter par exemple que des fausses cartes puissent être fabriquées.

Un des buts essentiels de la présente invention consiste à présenter un procédé qui permet d'éviter les inconvénients précités, c'est-à-dire qui permet de vérifier l'authenticité d'un document associé à une personne et l'identité du porteur de ce document sans qu'il soit nécessaire de conserver des éléments ou des informations secrets dans l'appareil qui réalise sur place cette vérification, sur le document à vérifier ou sur tout autre document utilisé lors de la vérification.

Le procédé suivant l'invention est caractérisé par le fait qu'il consiste :

1) A faire usage d'un document pourvu d'une donnée caractéristique S particulière, non nécessairement secrète, présentant une relation secrète avec le message secret M.

2) A introduire les informations relatives au message secret M et à la donnée caractéristique S dans un ordinateur.

3) A effectuer au moyen de cet ordinateur à partir d'au moins ces informations un traitement mathématique dont l'algorithme n'est pas nécessairement secret. Ce traitement mathématique comporte un chiffrement $E_B$ ou plusieurs chiffrements $E_A$, $E_B$,.... selon une méthode cryptographique à clef publique et n'utilise pour ce faire que des clefs A', B'... non nécessairement secrètes.

4) A obtenir de ce traitement mathématique un résultat T.

5) A vérifier que le résultat T comporte un nombre de référence F non nécessairement secret et indépendant du document.

6) A obtenir en outre à partir du résultat T des informations d'identification figurant en clair sur le document.

Dans le cas où la vérification doit être faite à distance par l'intermédiaire d'un réseau de télécommunications reliant des ordinateurs placés à proximité d'usagers à des ordinateurs de correspondants, aucun élément secret n'est utilisé par les premiers ordinateurs ; seuls les ordinateurs des correspondants emploient leur clef secrète.

Le procédé est caractérisé en ce qu'il consiste :

1) A faire usage d'un document pourvu d'une donnée caractéristique S particulière, non nécessairement secrète, présentant une relation secrète avec le message secret M.

2) A introduire dans l'ordinateur à proximité de l'usager les informations relatives au message secret M et à la donnée caractéristique S ainsi qu'une information R non secrète et transmise à distance par le correspondant.

3) A effectuer à partir d'au moins ces informations un traitement mathématique dont l'algorithme n'est pas nécessairement secret. Ce traitement mathématique comporte un chiffrement $E_B$ ou plusieurs chiffrements $E_A$, $E_B$,... selon une méthode cryptographique à clef publique et n'utilise pour ce faire que des clefs A', B'... non nécessairement secrètes et dont l'une au moins B' est conjuguée a une clef secrète B" du correspondant.

4) A obtenir ainsi un résultat modifié V;

5) A transmettre au correspondant le résultat modifié V.

6) A obtenir à partir d'au moins le résultat modifié V et l'information R un résultat T au moyen de calculs appropriés, effectués par l'ordinateur du correspondant. Ceux-ci comportent des chiffrements $D_B$, $E_B$,... et utilisent au moins la clef secrète B" du correspondant et la clef conjuguée B'.

7) A vérifier que le résultat T comporte un nombre de référence F non nécessairement secret et indépendant du document.

8) A obtenir en outre à partir du résultat T des informations d'identification du document.

Avantageusement, on utilise comme méthode de cryptographie à clef publique le système R.S.A.

(Rivest, Shamir et Adleman) avec l'algorithme suivant : $M^e$ modulo n = C, dans lequel M est le nombre entier qui fait l'objet du chiffrement, par exemple le nombre calculé à partir du message précité, e et n sont des nombres dont est composée la clef publique et C est le reste entier de la division de $M^e$ par n.

L'invention concerne également un appareil destiné à vérifier l'authenticité d'un document associé à une personne, tel que carte de crédit, carte de banque, chèque, badge d'accès, ainsi que l'identité de son détenteur. Cet appareil comprend, d'une part, des moyens permettant la lecture d'une donnée caractéristique S particulière du document et l'introduction par le détenteur du document d'un message secret M attestant de son identité et, d'autre part, un ordinateur relié auxdits moyens.

Il est caractérisé en ce que l'ordinateur comprend :

1) des moyens agencés pour effectuer à partir d'au moins la donnée caractéristique S particulière et le message secret M, un traitement mathématique donnant un résultat T. Ce traitement mathématique dont l'algorithme n'est pas nécessairement secret, comporte un ou plusieurs chiffrements $E_A$, $E_B$,... selon une méthode cryptographique à clef publique et n'utilise pour ce faire que des clefs A', B'... non nécessairement secrètes.

2) Des moyens agencés pour vérifier que le résultat T comporte un nombre de référence F non nécessairement secret et indépendant du document.

3) Des moyens agencés pour obtenir à partir du résultat T des informations d'identification figurant en clair sur le document.

Dans le cas où la vérification doit être faite à distance par un correspondant, l'appareil comprend un premier ordinateur agencé pour être relié par un réseau de télécommunications à un second ordinateur d'un correspondant et est caractérisé en ce que son ordinateur comprend des moyens agencés pour effectuer à partir d'au moins la donnée caractéristique S particulière du document, le message secret M du détenteur de ce document et une information R transmise par le correspondant, un traitement mathématique donnant un résultant modifié V. Ledit traitement mathématique dont l'algorithme n'est pas nécessairement secret, comporte un ou plusieurs chiffrements $E_A$, $E_B$,... selon une méthode cryptographique à clef publique et n'utilise pour ce faire que des clefs A', B'... non nécessairement secrètes et dont l'une au moins B' est conjuguée à une clef secrète B" du correspondant. Le premier ordinateur de l'appareil comprend en outre des moyens pour envoyer ledit résultat modifié V par ledit réseau de communications audit second ordinateur, ce dernier étant agencé pour obtenir à partir d'au moins le résultat modifié V et l'information R un résultat T au moyen de calculs appropriés, comportant des chiffrement $D_B, E_B$... et utilisant au moins la clef secrète B" et le clef conjuguée B', pour vérifier que le résultat T comporte un nombre de référence F non nécessairement secret et indépendant du document, et pour obtenir en outre à partir du résultat T des informations d'identification dudit document.

D'autres détails et particularités de l'invention ressortiront de la description donnée ci-après, à titre d'exemples non limitatifs, de quelques formes et applications particulières du procédé suivant l'invention ainsi que d'un appareil pour la mise en oeuvre de ce procédé. Les chiffres de référence utilisés se rapportent aux dessins annexés dans lesquels :

la figure 1 est une vue en perspective d'un appareil portatif suivant l'invention;

la figure 2 est un schéma-bloc d'une première forme de réalisation de l'appareil suivant l'invention;

la figure 3 est une représentation schématique des différentes étapes d'une application particulière du procédé suivant l'invention en ce qui concerne la vérification du document ;

la figure 4 est une représentation schématique de cette application en ce qui concerne la détermination de la caractéristique particulière du document à vérifier ;

la figure 5 représente un schéma-bloc d'une deuxième forme de réalisation de l'appareil suivant l'invention;

la figure 6 représente un schéma-bloc analogue d'une troisième forme de réalisation de l'appareil suivant l'invention;

la figure 7 est une représentation schématique d'une deuxième application particulière du procédé suivant l'invention.

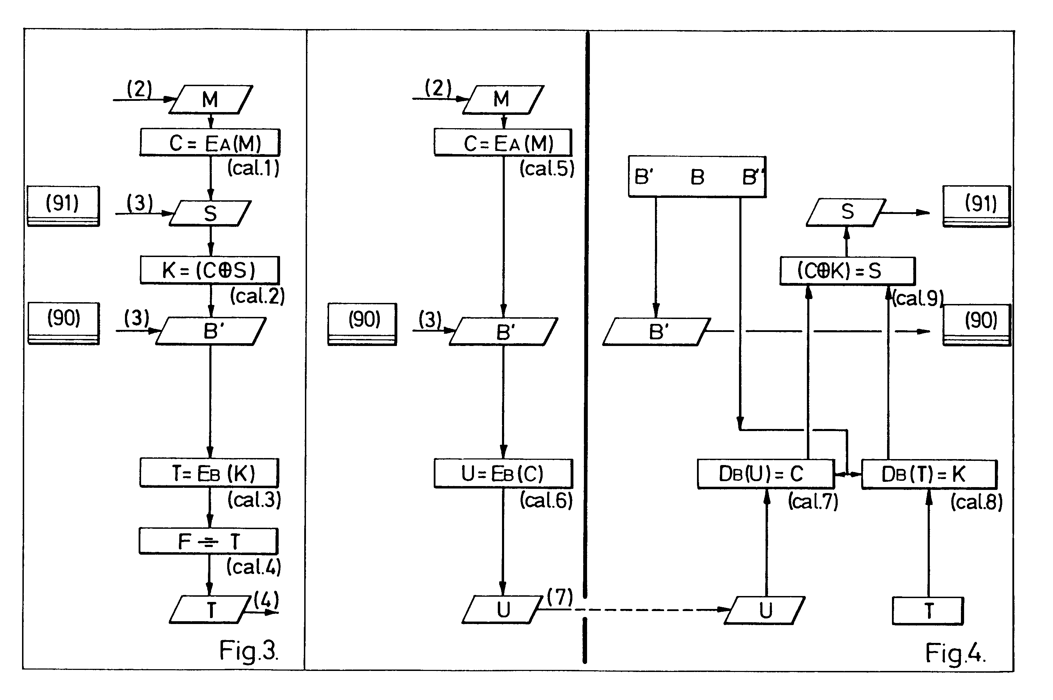

Dans les différentes figures les mêmes chiffres de référence désignent des éléments identiques ou analogues. Dans les figures 3, 4 et 7 les fonctions identiques, analogues ou réciproques sont placées sur une même ligne.

La présente invention est relative à un procédé permettant de vérifier l'authenticité d'un document lié à une personne et l'identité du porteur sans qu'il soit nécessaire de conserver des éléments ou des informations secrets dans l'appareil qui réalise cette vérification ou sur le document à vérifier ou sur tout autre document utilisé lors de la vérification. Ce document est par exemple une carte de crédit, une carte de banque, un chèque ou un badge d'accès.

Le procédé fait appel à la cryptographie à clef publique qui fait usage de clefs conjugées sont l'une doit être tenue secrète mais dont l'autre peut être dévoilée. Dans la suite du texte et sur les figures, les conventions décrites ci-dessous sont appliquées.

La clef publique d'un jeu de clefs X est appelée X' et la clef secrète conjuguée est nommée X". Les algorithmes de chiffrement effectués au moyen de la clef publique et de la clef secrète conjuguée sont désignés respectivement par $E_X()$ et par $D_X()$. Leur fonction peut être utilisée comme suit. Soit $E_A(M) = C$ un chiffrement effectué sur un nombre M représentant un message au moyen de la clef publique du jeu de clefs A. En connaissant C et l'algorithme cryptographique on ne peut retrouver M qu'en exécutant le chiffrement réciproque sur le nombre C au moyen de la clef secrète conjuguée :

$$D_A(C) = D_A(E_A(M)) = M \quad \text{(rel. 1)}$$

Pour ce faire la connaissance de la clef secrète est indispensable. Seul le possesseur de cette pourra retrouver M.

Avec les autres systèmes cryptographiques le possesseur d'une clef peut retrouver par calcul la clef conjuguée et grâce à celle-ci le nombre M.

L'intérêt de la cryptographie à clef publique réside dans le fait qu'il n'est pratiquement pas possible de retrouver une clef secrète à partir de la clef publique conjuguée même avec un ordinateur spécialisé très puissant lorsque la clef secrète est un nombre suffisamment élevé.

La méthode de cryptographie à clef publique préconisée d'une manière non exclusive est le système RSA (voir Rivest, Shamir et Adleman "A method for obtaining digital signatures and public-Key cryptosystems" MIT/LCS/TM-82 April 1977).

Dans le système RSA les clefs conjuguées sont formées de deux nombres : un nombre commun et un nombre propre. La clef publique se compose des nombres n et e et la clef secrète des nombres n et d. On aura :

$$E(M) = M^e \text{ modulo } n = C \text{ (chiffrement avec clef publique)} \quad \text{(rel. 2)}$$
$$D(C) = C^d \text{ modulo } n = M \text{ (chiffrement avec clef secrète)} \quad \text{(rel. 3)}$$

La nombre M doit être entier. Le modulo n de la puissance e de M ou de la puissance d de C est le reste entier de la division de $M^e$ ou de $C^d$ par n. Le nombre e qui n'est pas secret peut être un petit nombre, ce qui simplifie le calcul. Avantageusement, on utilise le nombre 3, comme exposant de M. Le nombre n, qui lui aussi n'est pas secret, est le produit de deux grands nombres premiers p et q.

Suivant l'invention, n est avantageusement composé de deux facteurs premiers très grands qui chacun sont de préférence supérieurs à la puissance 200 de 2.

Il est important de noter que p et q doivent rester secrets, étant donné qu'ils permettent de trouver l'élément secret de la clef secrète grâce à la formule :

e.d modulo [(p-1) . (q-1)] = 1

Ces facteurs secrets peuvent être pris au hasard parmi une multitude de nombres premiers afin qu'ils ne puissent pratiquement pas être retrouvés.

Le procédé fait un usage original de la cryptographie à clefs publiques en n'utulisant pas de clefs secrètes lorsque la vérification de l'authenticité du document et de l'identité du détenteur est réalisé sur place. Quand cette vérification est faite à distance par un correspondant, une clef secrète n'est utilisée que par l'ordinateur de ce dernier.

Ainsi, suivant l'invention, on exécute un traitement mathématique à partir d'au moins deux informations :

. Un message secret, choisi et gardé par le détenteur légitime du document, attestant l'identité du porteur, comportant des lettres, des chiffres et/ou des signes ;

. Une caractéristique particulière du document, représentant un nombre S qui ne doit pas nécessairement être tenu secret sous sa forme codée mais qui présente une relation cachée avec ledit message secret.

Cette relation cachée est dévoilée par le traitement mathématique ; le résultat de celui-ci doit avec la correspondance attendue avec un nombre de référence F, non secret, indépendant du document et avec des informations propres au document.

Ces informations sont par exemple l'année d'émission et le numéro d'enregistrement du document ou le numéro de compte du détenteur. Le possesseur d'une vraie carte ne pourra donc pas utiliser une carte volée en remplaçant le nombre S de cette carte par le nombre S de la sienne en vue d'employer son propre message secret avec la carte volée. En agissant ainsi il dévoilerait sa véritable identité. Le message secret transposé sous forme d'un nombre M subit au cours du traitement mathématique au moins un chiffrement au moyen d'une clef publique. De cette manière la connaissance de l'algorithme utilisé et du nombre S propre à un document ne permet pas de retrouver le message secret correspondant si ce n'est par l'emploi de la clef secrète conjuguée qui n'est pas incorporée à l'appareil mettant en oeuvre le procédé de vérification ni utilisée par celui-ci.

En pratique, l'emploi frauduleux d'une carte volée est de ce fait rendu impossible, puisqu'on ne peut pas connaître M.

Le nombre S déduit de la caractéristique particulière du document à vérifier subit également au cours du traitement mathématique au moins un chiffrement au moyen d'une clef publique. En conséquence, la connaissance de l'algorithme utilisé ne permet pas de trouver le nombre S correspondant à un message donné. La fabrication de fausses cartes est de ce fait rendue impossible.

Les chiffrements du nombre M et du nombre S peuvent être exécutés simultanément ; dans ce cas, c'est une fonction de ces deux nombres qui est chiffrée.

La présente invention est également relative à un appareil servant à vérifier l'authenticité du document et l'identité du porteur, plus particulièrement à un appareil mettant en oeuvre le procédé dont il est question ci-dessus.

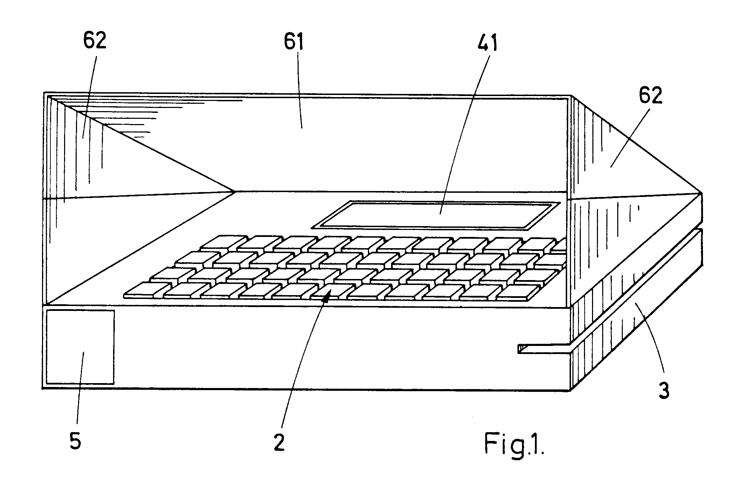

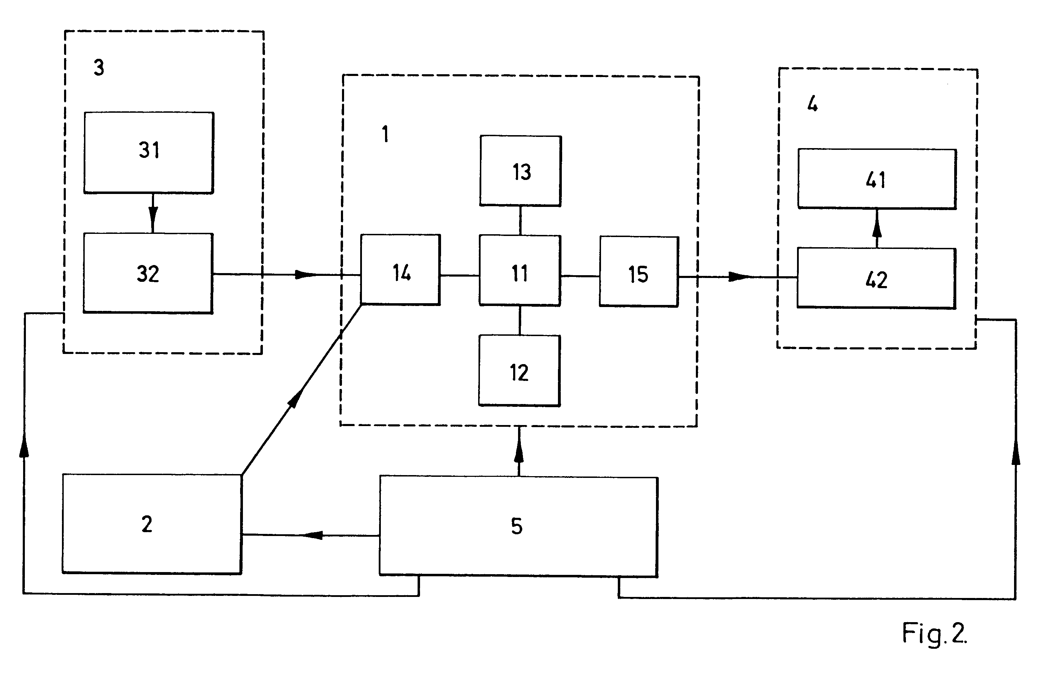

Pour les applications relatives aux cartes de crédit, cet appareil est portatif et autonome ; il comporte les éléments suivants (voir fig. 1 et 2) :
un ordinateur (1) pouvant être réalisé à l'aide d'un microprocesseur monopuce comprenant une unité de calcul CPU (11) , une mémore ROM (12), dont le contenu ne peut plus être modifié, une mémoire vive RAM (13), des portes d'entrée (14) et des portes de sortie (15);
des moyens (2) permettant de former manuellement un message, tel qu'un clavier comprenant des lettres, des chiffres, quelques signes et des touches de contrôle et reliés à des portes d'entrée (14) du microprocesseur (1); un lecteur (3) de document, tel qu'un lecteur de carte magnétique muni d'une tête de lecture magnétique (31) et d'un circuit intégré de mise en forme (32) et relié à des portes d'entrée (14) du microprocesseur (1); un indicateur (4), tel qu'un afficheur à cristaux liquides LCD comprenant un écran (41) et un circuit intégré de commande (42) et relié à des portes de sortie (15) du microprocesseur (1);
une alimentation générale (5) telle que des piles ;
un écran opaque protégeant des regards indiscrets les moyens (2) et l'écran (41) de l'indicateur (4), formé d'un rabat principal (61) et de volets latéraux (62).

Les éléments de l'appareil peuvent avantageusement être moulés dans une résine transparente afin de rendre très difficile le camouflage d'une falsification.

Cet appareil fonctionne de la manière suivante (voir figure 3) :

Le porteur de la carte de crédit frappe sur le clavier (2) le message secret que l'appareil transpose en un nombre binaire M au moyen d'un code tel que le code ASCII. (American Standard Code for Information Interchange).

Par exemple, au moyen du code "Even parity ASCII" la lettre A est transposée en l'octet 01000001 et le chiffre 1 en l'octet 10110001. Sous la forme d'octets les caractères peuvent être acceptés par une mémoire digitale.

Les différents octets représentant les caractères du message sont placés les uns à la suite des autres ; ils forment ainsi un grand nombre binaire, le nombre M.

Dès la fin du message, l'appareil chiffre le nombre binaire M, on obtient :

$$C = E_A(M) \qquad (cal. 1)$$

Si l'appareil utilise la méthode cryptographique RSA, il détermine le reste entier de la division de $M^e$ (par exemple $M^3$) par le nombre n, le diviseur, contenu dans la mémoire ROM (12) (voir rel.2)

Lorsque le calcul est terminé, la carte de crédit (91) est introduite dans le lecteur (3) et l'appareil forme un nombre fonction du résultat C du calcul précédent et du nombre binaire S lu sur la carte, par exemple, en effectuant une addition modulo 2 entre les bits de même rang de ces deux nombres. Cette opération peut se représenter par $(C \oplus S)$ ; on obtient :

$$K = (C \oplus S) \qquad (rel. 4) (cal. 2)$$

Comme exemple de ce genre d'opération : $(1100 \oplus 1010) = 0110$
En effet :
$(1 + 1)$ modulo $2 = 0$
$(1 + 0)$ modulo $2 = 1$
$(0 + 1)$ modulo $2 = 1$
$(0 + 0)$ modulo $2 = 0$

Avec a, b, c représentant des nombres binaires quelconques les relations suivantes se vérifient :

$$(0 \oplus a) = (a \oplus 0) = a \qquad (rel.5)$$
$$(a \oplus a) = 0 \qquad (rel. 6)$$
$$(a \oplus (b \oplus c)) = ((a \oplus b) \oplus c) \qquad (rel. 7)$$

Ensuite, une carte (90) du même organisme de crédit en possession de la personne chargée de la vérification (le commerçant par exemple) est introduite dans le lecteur (3). L'appareil reçoit alors une information non secrète concernant le clef B utilisée par cet organisme et la place dans la mémoire RAM (13).

Dans la méthode RSA cette information sera le nombre binaire n relatif à la clef B (voir rel. 2).

L'appareil effectue ensuite sur le nombre K un chiffrement comme précédemment mais en utilisant la clef publique (B') on obtient le résultat T.

$$T = E_B(K) \qquad (rel. 8) (cal. 3)$$

L'appareil vérifie enfin la correspondance attendue entre un nombre de référence F non secret, contenu dans la mémoire ROM (12) et le résultat T du traitement mathématique et affiche, en cas favorable, une information issue de T. Pour ce faire il peut par exemple tronçonner le nombre binaire T en plusieurs blocs de bits $T_1$, $T_2$, ... Un de ces blocs doit avoir la correspondance attendue avec le nombre de référence F :

$$F = T \qquad (cal. 4)$$

Deux autres blocs représentent une suite de codes ASCII qui sont transposés en caractères et sont affichés. Ces affichages doivent correspondre à des indications marquées en clair sur la carte de crédit ; par exemple au numéro de cette carte et à l'année d'émission de celle-ci. Le commerçant peut facilement faire cette vérification.

De cette manière, l'authenticité de ces indications et la réalité du lien qui les unit au message secret sont vérifiées.

Une autre information qui ne figure pas sur la carte de crédit peut être également affichée ; retranscrite sur la note de débit rédigée par le commerçant à l'intention de l'organisme de crédit elle atteste que l'appareil a effectivement été utilisé.

En ce qui concerne l'élaboration de la carte de crédit (91), le nombre S à placer sur la carte est élaboré en deux étapes (voir fig. 4) :

La première étape peut être réalisée dans une agence agréée.

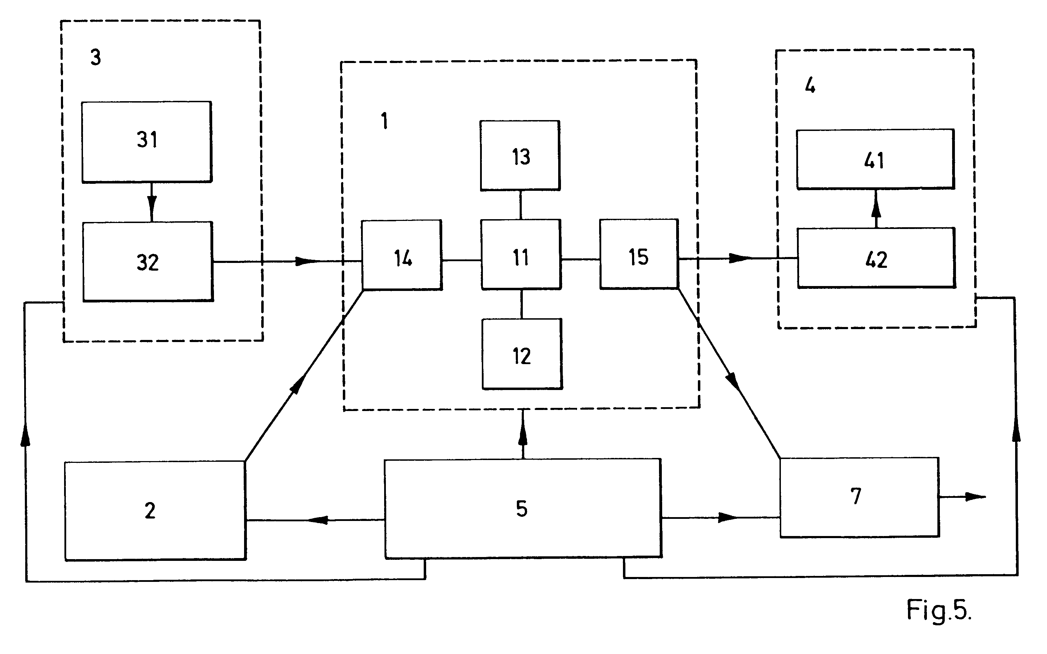

Le futur détenteur de la carte frappe le message secret qu'il a choisi sur le clavier d'un appareil semblable au précédent mais pourvu d'un circuit de sortie (7) relié à une porte de sortie du microprocesseur (1) (voir figure 5).

La procédure suivie est la même que celle décrite précédemment sauf qu'il n'y a pas de carte de crédit à introduire. Soit U le résultat du traitement mathématique :

$$C = E_A(M) \qquad (rel. 9) (cal.5)$$
$$U = E_B(C) \qquad (rel. 10) (cal. 6)$$

L'appareil transmet par le circuit de sortie (70 le résultat U du calcul en n'effectuant pas de vérification ni d'affichage sans objet dans ce cas. Le nombre transmis est par exemple imprimé et fourni à l'organisme de crédit avec le bulletin d'inscription.

Lors de la deuxième étape, l'ordinateur de l'organisme de crédit deux nombres au moyen de la clef secrète (B″) conjuguée à la clef publique (B') utilisée lors du deuxième chiffrement. Ces deux nombres sont le nombre U et un nombre identique du résultat T du traitement mathématique qu'on désire obtenir lors de la vérification (voir ci-dessus). On obtient :

$$D_B(U) = C \qquad (cal. 7)$$

puisque $U = E_B(C)$ (voir rel. 10 et 1)

$D_B(T) = K$  (cal. 8)

puisque $T = E_B(K)$ (voir rel. 8 et 1)

L'ordinateur trouve ensuite le nombre S à placer sur la carte de crédit en effectuant l'addition modulo 2 des bits de même rang des résultats des deux chiffrements ; on obtient :

$(C \oplus K) = S$  (cal. 9)

En effet, puisque $K = (C \oplus S)$ (voir rel. 4)

$(C \oplus K) = (C \oplus (C \oplus S)) = S$ (voir rel. 7, 6 et 5)

Il est à remarquer que la clef secrète conjuguée à la clef publique A′ utilisée pour le premier chiffrement du message secret n'est utilisée à aucun moment. Cette clef peut donc être volontairement détruite par l'institution qui développe l'appareil. Ce premier chiffrement devient dès lors équivalent à un codage irréversible. Ainsi, aucun tiers au détenteur de la carte de crédit n'est en mesure de retrouver le message secret. Le détenteur est donc seul responsable de la sauvegarde du secret. De plus, la clef secrète B″ propre à un organisme de crédit n'est utilisée que par l'ordinateur de cet organisme et non pas par l'appareil effectuant la vérification de l'authenticité de la carte de crédit et de l'identité du porteur. Ainsi cet organisme est seul possesseur de cette clef secrète et seul responsable d'un emploi frauduleux éventuel de celle-ci (fabrication de fausses cartes).

Le document, carte de crédit, carte de banque, chèque, badge d'accès etc... dont l'authenticité est à vérifier doit contenir une information qui représente le nombre S et qui est lue par l'appareil suivant l'invention ; pour ce faire il est muni par exemple d'une bande magnétique, d'une piste optique etc...

Ainsi, l'invention concerne plus particulièrement un chèque pourvu d'un dépôt magnétique sous forme d'une bande ou d'un emplacement réservé à une inscription en codes à barres contenant des informations pour permettre de vérifier l'authenticité de ce chèque ainsi que l'identité du détenteur par la mise en oeuvre du procédé et/ou de l'appareil tel que décrit ci-dessus.

D'autres versions de l'appareil permettant la vérification des cartes de crédit peuvent être réalisées :

- Un traitement mathématique simplifié ne comportant pas le premier chiffrement de M peut être adopté. on obtient alors :

$T = E_B(M \oplus S)$.

Mais dans ce cas l'organisme de crédit peut retrouver le message secret par l'emploi de la clef secrète nécessaire à l'élaboration de la carte de crédit.

- Le traitement mathématique peut comporter, d'une part, un chiffrement de M au moyen de la clef publique A′ contenue dans la mémoire ROM (12) et, d'autre part, un chiffrement du nombre S au moyen de la clef publique B′ placée en mémoire RAM (13). Le résultat du traitement mathématique est un nombre fonction des résultats des chiffrements obtenus par exemple en effectuant une addition modulo 2 entre les bits de même rang des résultats des chiffrements. On obtient :

$T = (E_A(M) \oplus E_B(S))$.

- Dans tous les traitements mathématiques envisagés ci-dessus des chiffrements peuvent être ajoutés.

Dans chaque cas la procédure d'élaboration du nombre D doit être adaptée.

Pour les applications relatives aux payements automatiques, aux retraits de fonds et au contrôle d'accès, l'appareil mettant en oeuvre le procédé fait partie d'un équipement fixe, il comporte les mêmes éléments que l'appareil vérifiant les cartes de crédit, mais pourvu en plus d'un circuit de sortie (7) et éventuellement d'un circuit d'entrée (8) (voir figure 5). L'alimentation (5) est normalement obtenue à partir du réseau. D'autre part, la clef publique B′ nécessaire au deuxième chiffrement peut être incorporée à l'appareil, être lue préalablement par le lecteur (3) à partir d'une carte détenue par le responsable de l'équipement ou être transmise à l'appareil par la liaison (8). Dans ces deux derniers cas la clef peut être facilement renouvelée chaque année par exemple.

Le fonctionnement est très semblable à celui de l'appareil destiné à la vérification des cartes de crédit (voir figure 3) :

- Frappe du message secret et transposition de celui-ci en un nombre M.
- Chiffrement de M au moyen de la clef publique A′: on obtient le nombre C.
- Lecture du nombre S de la carte de banque ou du badge d'accès et calcul de (C O C) : on obtient K.
- Chiffrement du nombre K au moyen de la clef publique B′: on obtient T.
- Vérification de la correspondance attendue entre le nombre de référence F et un des blocs du nombre binaire T.
- Envoi par la liaison (7) au reste de l'équipement (distributeur de fonds, mécanisme d'ouverture etc...) du résultat de la vérification et des blocs de T représentant les informations d'identification de la carte et de son détenteur.

Comme pour la vérification des cartes de crédit diverses variantes du procédé sont possibles.

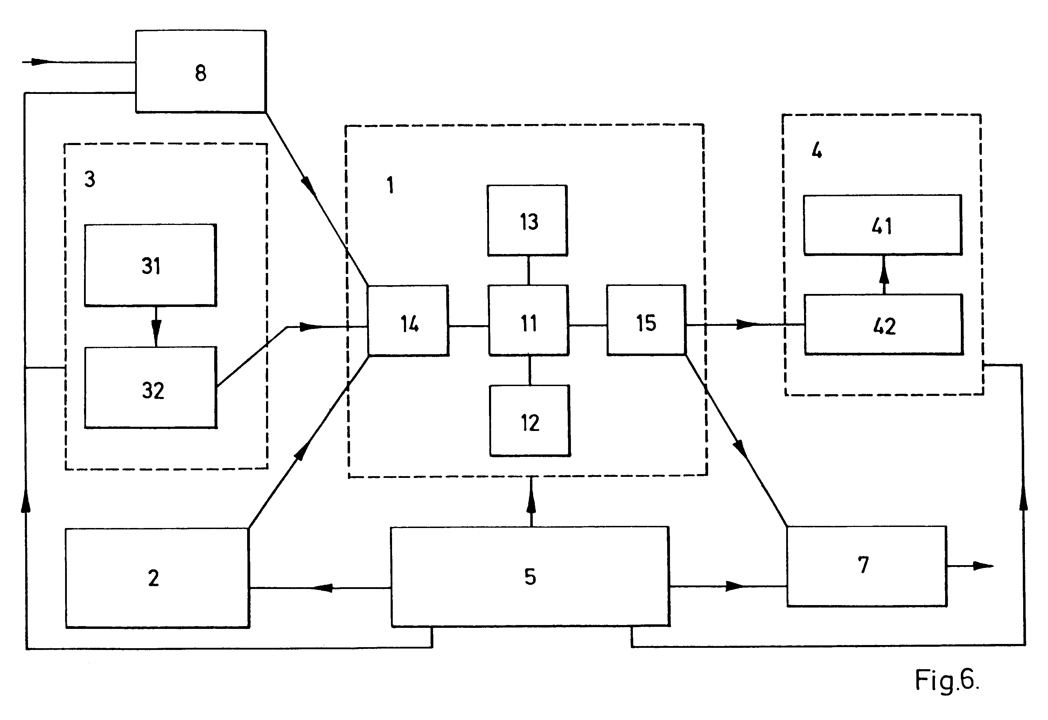

Pour des applications de télécommunications où un usager d'un réseau doit se faire connaître de manière certaine au poste central constituant le correspondant, l'appareil comporte les mêmes éléments que dans le cas précédent (voir figure 6), les liaisons (7) et (8) étant raccordées au réseau de télécommunication.

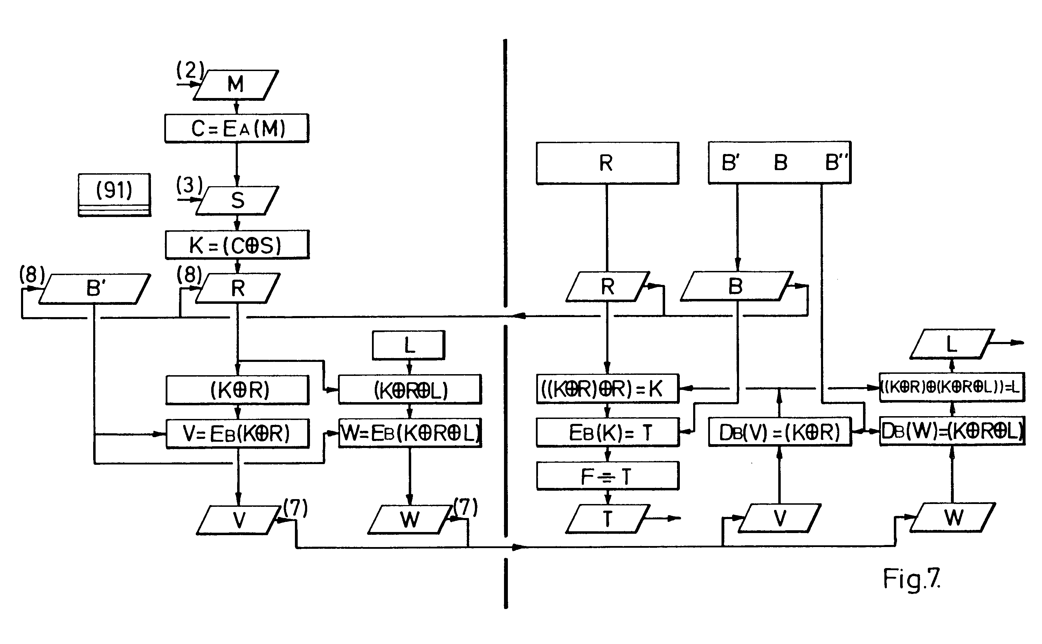

Dès que la communication est établie la procédure suivante est suivie (voir figure 7) :

- Frappe du message secret et transposition de celui-ci en un nombre M.
- Chiffrement de M au moyen de la clef publique A': on obtient le nombre C.
- Lecture du nombre S de la carte d'usager et calcul de $(C \oplus S)$ : on obtient K.
- Réception d'un nombre R envoyé par le correspondant. Ce nombre peut être aléatoire ou définir le moment de la communication (date, heure, etc...).
- Calcul de $(K \oplus R)$.
- Chiffrement de $(K \oplus R)$ au moyen de la clef publique B'. On obtient ainsi le nombre V :

$$V = E_B(K \oplus R)$$

- Envoi du nombre V au correspondant.

La vérification de l'authenticité de la carte d'usager et de l'identité du possesseur est faite par le correspondant à partir des nombres R et V au moyen des clefs publique B'et secrète B'', de la manière suivante :

$$E_B(D_B(V) \oplus R) = E_B((K \oplus R) \oplus R) = E_B(K) = T$$

Comme précédemment un des blocs des bits de T doit avoir la correspondance attendue avec le nombre de référence F ; deux autres blocs donnent les informations d'identification de la carte et de son détenteur.

Comme les réseaux de télécommunications ne sont pas à l'abri des indiscrétions, il est à remarquer qu'à chaque communication le nombre V est différent puisque R l'est ; un réemploi frauduleux de V est ainsi exclu.

Pour les applications de paiements automatiques, de "Home banking" etc..., lorsque l'usager veut faire parvenir au correspondant une information L secrète et signée dont celui-ci peur seul prendre connaissance et avoir la preuve de son origine (la signature) , il envoie au correspondant un deuxième nombre W :

$$W = E_B (K \oplus R \oplus L).$$

Le correspondant peut reconstituer L à partir des résultats des chiffrements de V et de W au moyen de la clef secrète B'':

$$(D_B(V)) \oplus D_B(W)) = ((K \oplus R) \oplus (K \oplus R \oplus L)) = L$$

Dans l'art antérieur un message secret et signé devait nécessairement recevoir un chiffrement effectué au moyen d'une clef secrète alors que dans le procédé décrit il n'est fait usage que de clefs publiques pour chiffrer le message L

L'information L peut être la cas échéant une clef cryptographique élaborée par l'usager permettant un échange de message entre l'usager et le correspondant.

Comme pour la vérification des cartes de crédit diverses variantes du procédé sont possibles.

Il est bien entendu que l'invention n'est pas limitée aux formes de réalisation décrites ci-dessus. C'est ainsi que des systèmes cryptographiques à clef publique autres que le système RSA pourraient être utilisés et que l'appareil pourrait être modifié et adapté suivant l'application particulière envisagée.

Par le terme "chiffrement" utilisé dans la présente description, il y a lieu d'entendre tout type de calcul répondant aux règles de la cryptographie à clef publique et comportant un ou plusieurs algorithmes semblables ou différents.

**Revendications**

1. Procédé destiné à vérifier l'authenticité d'un document associé à une personne, tel que carte de crédit, carte de banque, chèque, badge d'accès, ainsi que l'identitié de son détenteur en faisant un traitement d'informations à partir d'au moins un message secret (M) attestant de l'identité du détenteur du document, caractérisé en ce qu'il consiste à faire usage d'un document pourvu d'une donnée caractéristique (S), non nécessairement secrète, présentant une relation secrète avec le message secret (M), à introduire les informations relatives au message secret (M) et à la donnée caractéristique (S) dans un ordinateur, à effectuer au moyen dudit ordinateur à partir d'au moins lesdites informations un traitement mathématique dont l'algorithme n'est pas nécessairement secret, ledit traitement mathématique comportant un chiffrement ($E_B$) ou plusieurs chiffrements ($E_A$, $E_B$, ...) selon une méthode cryptographique à clef publique et n'utilisant pour ce faire que des clefs (A', B'....) non nécessairement secrètes, à obtenir dudit traitement mathématique un résultat (T), à vérifier que le résultat (T) comporte un nombre de référence (F) non nécessairement secret et indépendant du document et à obtenir en outre à partir du résultat (T) des informations d'identification figurant en clair sur le document.

2. Procédé destiné, dans un réseau de télécommunications reliant des premiers ordinateurs placés à proximité d'usagers à des seconds ordinateurs de correspondants, à vérifier à distance l'authenticité d'un document associé à une personne, tel que carte de crédit, carte de banque, chèque, badge d'accès, ainsi que l'identité de son détenteur en faisant des traitements d'informations à partir d'au moins un message secret (M) attestant de l'identité du détenteur du document, caractérisé en ce qu'il consiste à faire usage d'un document pourvu d'une donnée caractéristique particulière (S), non nécessairement secrète, présentant une relation secrète avec le message secret (M), à introduire dans ledit premier ordinateur (1) les informations relatives au message secret (M) et à la donnée caractéristique particulière (S) ainsi qu'une information (R) non secrète et transmise à distance à partir dudit second ordinateur, à effectuer au moyen dudit premier ordinateur à partir d'au moins lesdites informations un traitement mathématique dont l'algorithme n'est pas nécessairement secret, ledit traitement mathématique comportant un chiffrement ($E_B$) ou plusieurs chiffrements ($E_A$, $E_B$, ...) selon une méthode cryptographique à clef publique et n'utilisant pour ce faire que des clefs (A', B'...) non nécessairement secrètes et dont l'une au moins (B') est conjuguée à une clef secrète (B") du correspondant, à obtenir ainsi un résultat modifié (V), à transmettre audit second ordinateur le résultat modifié (V), à obtenir à partir d'au moins le résultat modifié (V) et l'information (R) un résultat (T) au moyen de calculs appropriés, effectués par ledit second ordinateur, comportant des chiffrements ($D_B$, $E_B$, ...) et utilisant au moins la clef secrète (B") du correspondant et la clef conjugée (B'), à vérifier que le résultat (T) comporte un nombre de référence (F) non nécessairement secret et indépendant du document, et à obtenir en outre à partir du résultat (T) des informations d'identification dudit document.

3. Procédé suivant l'une ou l'autre des revendications 1, et 2, caractérisé en ce que l'on utilise un message secret (M), formé d'une suite de signes tels que lettres, chiffres, espaces, symboles etc...

4. Procédé suivant l'une quelconque des revendications 1 à 3, caractérisé en ce que l'on utilise un message secret (M) qui est indépendant des informations d'identification inscrites en clair sur le document et qui peut être choisi par le futur détenteur du document.

5. Procédé suivant l'une quelconque des revendications 1 à 4, caractérisé en ce que l'on utilise comme méthode de cryptographie à clef publique le système R.S.A. (Rivest, Shamir et Adleman) avec l'algorithme suivant :
$M^e$ modulo n = C, dans lequel M est le nombre entier faisant l'objet du chiffrement ou un nombre fonction de celui-ci, dans lequel e et n sont des nombres entiers composant la clef publique et C est le reste entier de la division de $M^e$ par n, et en ce que le résultat du chiffrement est soit le résultat de ce calcul, soit une fonction de celui-ci, soit une fonction du résultat de plusieurs calculs effectués successivement suivant un algorithme semblable ou différent, le résultat d'un calcul ou une fonction de celui-ci faisant l'objet du calcul suivant.

6. Procédé suivant la revendication 5, caractérisé en ce que l'exposant utilisé dans un ou plusieurs chiffrements est le nombre 3.

7. Procédé suivant l'une ou l'autre des revendications 5 et 6, caractérisé en ce que le diviseur n, utilisé dans le chiffrement ou dans l'un de ceux-ci, n'est composé que de deux facteurs premiers très grands qui chacun sont de préférence supérieurs à la puissance 200 de 2.

8. Procédé suivant la revendication 1 ou l'une quelconque des revendications 3 à 7, caractérisé en ce qu'on effectue d'abord le chiffrement ($E_A$) du message secret (M), transposé au préalable sous forme numérique, en ce qu'on effectue ensuite le chiffrement ($E_B$) d'un nombre, fonction du résultat du premier chiffrement ($E_A$) et de la donnée caractéristique (S), prévue sur le document, transposée préalablement sous forme numérique et en ce qu'on examine la correspondance entre le résultat (T) de ce traitement mathématique et le nombre de référence précité (F).

9. Procédé suivant la revendication 1 ou l'une quelconque des revendications 3 à 7, caractérisé en ce qu'on effectue le chiffrement ($E_B$) d'un nombre, fonction du message secret (M) et de la donnée caractéristique (S), prévue sur le document, chacun transposés préalablement sous forme numérique, et en ce qu'on examine la correspondance entre le résultat (T) de ce traitement mathématique et le nombre de référence précité (F).

**10.** Procédé suivant la revendication 1 ou l'une quelconque des revendications 3 à 7, caractérisé en ce qu'on effectue séparément le chiffrement (E_A) du message secret (M), transposé préalablement sous forme numérique, et le chiffrement (E_B) de la donnée caractéristique (S), prévue sur le document, transposée également préalablement sous forme numérique, en ce qu'on forme un nombre, fonction des résultats des chiffrements et en ce qu'on examine la correspondance entre le résultat (T) de ce traitement mathématique et le nombre de référence précité (F).

**11.** Procédé suivant l'une quelconque des revendications 8 à 10, caractérisé en ce qu'il consiste à utiliser le résultat (T) du traitement mathématique à la vérification par l'ordinateur de la correspondance attendue avec le nombre de référence précité (F), inscrit initialement dans la mémoire de celui-ci et à la fourniture d'informations par un indicateur, tel qu'un afficheur LCD, une imprimante etc. permettant à un tiers de vérifier la correspondance attendue avec une ou plusieurs inscriptions d'identification figurant en clair sur le document.

**12.** Procédé suivant l'une quelconque des revendications 8 à 10, caractérisé en ce qu'il consiste à utiliser le résultat (T) du traitement mathématique à la vérification par l'ordinateur de la correspondance attendue avec le nombre de référence précité (F), inscrit initialement dans la mémoire de celui-ci et à transmettre par une liaison, telle qu'une liaison électrique, optique etc., un signal donnant le résultat de la vérification et éventuellement des informations d'identification provenant du résultat du traitement mathématique.

**13.** Procédé suivant l'une quelconque des revendications 2 à 7, caractérisé en ce qu'on effectue d'abord le chiffrement (E_A) du message secret (M), transposé au préalable sous forme numérique, en ce qu'on effectue ensuite le chiffrement (E_B) d'un nombre, fonction du résultat du premier chiffrement, de la donnée caractéristique (S), prévue sur le document, transposée au préalable sous forme numérique et d'une information (R) transmise par le correspondant devant vérifier à distance l'authenticité du document et l'identité du détenteur, en ce qu'on transmet à ce correspondant le résultat modifié (V) du traitement mathématique et en ce que ce correspondant, après avoir effectué les calculs appropriés, effectue les vérifications susdites en examinant la correspondance entre le résultat (T) de ces derniers calculs et le nombre de référence précité (F) et en contrôlant à partir du résultat (T) susdit les données d'identification du document qui en découlent.

**14.** Procédé suivant l'une quelconque des revendications 2 à 7, caractérisé en ce qu'on effectue le chiffrement (E_B) d'un nombre, fonction du message secret (M), transposé au préalable sous forme numérique, de la donnée caractéristique (S) prévue sur le document, également transposé au préalable sous forme numérique et d'une information (R) transmise par le correspondant devant vérifier à distance l'authenticité du document et l'identité du détenteur, en ce qu'on transmet à ce correspondant le résultat modifié (V) du traitement mathématique et en ce que ce correspondant, après avoir effectué les calculs appropriés, effectue les vérifications susdites en examinant la correspondance entre le résultat (T) de ces derniers calculs et le nombre de référence précité (F) et en contrôlant à partir du résultat susdit les données d'identification du document qui en découlent.

**15.** Procédé suivant la revendication 13, caractérisé en ce qu'on effectue un deuxième traitement mathématique qui comprend d'abord le chiffrement (E_A) du message secret (M), transposé au préalable sous forme numérique, ensuite le chiffrement (E_B) d'un nombre, fonction du résultat du premier chiffrement, de la donnée caractéristique (S) prévue sur le document, transposée au préalable sous forme numérique, de l'information (R) transmise par le correspondant et d'une information secrète (L), et en ce que l'on transmet également à ce correspondant le résultat (W) de ce deuxième traitement mathématique en vue de transmettre l'information secrète sous une forme telle que seul le possesseur de la clef secrète appropriée puisse en prendre connaissance et être assuré de la provenance de cette information.

**16.** Procédé suivant la revendication 14, caractérisé en ce qu'on effectue un deuxième traitement mathématique qui comprend le chiffrement (E_B) d'un nombre, fonction du message secret (M), transposé au préalable sous forme numérique, de la donnée caractéristique (S), prévue sur le document, également transposée au préalable sous forme numérique, de l'information (R) transmise par le correspondant et d'une information secrète (L), et en ce que l'on transmet également à ce correspondant le résultat (W) de ce deuxième traitement mathématique en vue de transmettre l'information secrète sous une forme telle que seul le possesseur de la clef secrète appropriée puisse en prendre connaissance et être assuré de la provenance de cette information.

17. Appareil destiné à vérifier l'authenticité d'un document associé à une personne, tel que carte de crédit, carte de banque, chèque, badge d'accès, ainsi que l'identité de son détenteur comprenant d'une part des moyens permettant la lecture d'une donnée caractéristique (S) particulière dudit document et l'introduction par ledit détenteur d'un message secret (M) attestant de son identité et d'autre part un ordinateur relié auxdits moyens, cet appareil étant caractérisé en ce que ledit ordinateur comprend :

(1) des moyens agencés pour effectuer à partir d'au moins la donnée caractéristique (S) particulière et le message secret (M), un traitement mathématique donnant un résultat (T), ledit traitement mathématique dont l'algorithme n'est pas nécessairement secret, comportant un ou plusieurs chiffrements ($E_A$, $E_B$,...) selon une méthode cryptographique à clef publique et n'utilisant pour ce faire que de clefs (A', B',...) non nécessairement secrètes,

(2) des moyens agencés pour vérifier que le résultat (T) comporte un nombre de référence (F) non nécessairement secret et indépendant du document et

(3) des moyens agencés pour obtenir à partir du résultat (T) des informations d'identification figurant en clair sur le document.

18. Appareil placé à proximité des usagers comprenant d'une part un premier ordinateur agencé pour être relié par un réseau de télécommunications à un second ordinateur d'un correspondant permettant de vérifier à distance l'authenticité d'un document associé à une personne, tel que carte de crédit, carte de banque, chèque, badge d'accès, ainsi que l'identité de son détenteur, et d'autre part des moyens reliés audit premier ordinateur et permettant la lecture d'une donnée caractéristique (S) particulière dudit document, l'introduction par ledit détenteur d'un message secret (M) attestant de son identité et la réception d'une information (R) transmise par ledit correspondant, cet appareil étant caractérisé en ce que ledit premier ordinateur comprend des moyens agencés pour effectuer à partir d'au moins la donnée caractéristique (S) particulière, le message secret (M) et l'information (R), un traitement mathématique donnant un résultat modifié (V), ledit traitement mathématique dont l'algorithme n'est pas nécessairement secret, comportant un ou plusieurs chiffrements ($E_A$, $E_B$, ...) selon une méthode cryptographique à clef publique et n'utilisant pour ce faire que des clefs (A', B'...) non nécessairement secrètes, et dont l'une au moins (B') est conjuguée à une clef secrète (B") du correspondant, et des moyens pour envoyer ledit résultat modifié (V) par ledit réseau de télécommunications audit second ordinateur, ce dernier étant agencé pour obtenir à partir d'au moins le résultat modifié (V) et l'information (R) un résultat (T) au moyen de calculs appropriés, comportant des chiffrements ($D_B$, $E_B$,...) et utilisant au moins la clef secrète (B") et la clef conjuguée (B'), pour vérifier que le résultat (T) comporte un nombre de référence (F) non nécessairement secret et indépendant du document, et pour obtenir en outre à partir du résultat (T) des informations d'identification dudit document.

19. Appareil suivant l'une ou l'autre des revendications 17 et 18, caractérisé en ce que l'ordinateur comprend une unité de calcul, une mémoire dont le contenu ne peut être modifié, une mémoire vive dans laquelle des informations peuvent être introduites et des portes d'entrée et de sortie, en ce que le lecteur est muni d'une tête de lecture magnétique ou optique et éventuellement d'un circuit de mise en forme et est relié au moins à une porte d'entrée de l'ordinateur, et en ce qu'un indicateur tel qu'un afficheur à cristaux liquides LCD est prévu et relié au moins à une porte de sortie de l'ordinateur éventuellement par l'intermédiaire d'un circuit de commande.

**Claims**

1. Method intended to verify the authenticity of a document associated with a person, such as a credit card, bank card, cheque, access badge, as well as the identity of its holder by carrying out an information processing on the basis of at least one secret message (M) attesting the identity of the holder of the document, characterised in that it consists in making use of a document provided with a special characteristic datum (S), not necessarily secret, having a secret relation with the secret message (M), in introducing the information relating to the secret message (M) and to the characteristic datum (S) into a computer, in performing by means of the said computer on the basis of at least the said information a mathematical processing whose algorithm is not necessarily secret, the said mathematical processing comprising an encryption (E$_B$) or several encryptions (E$_A$, E$_B$, ...) according to a public-key cryptographic method, using to do this only keys (A', B'...) which are not necessarily secret, in obtaining a result (T) from the said mathematical processing, in verifying that the result (T) comprises a not necessarily secret reference number (F) independent of the document, and in furthermore obtaining on the basis of the result (T) identification information appearing uncoded on the document.

2. Method intended, in a telecommunications network connecting first computers placed near users to second computers of correspondents, to remotely verify the authenticity of a document associated with a person, such as a credit card, bank card, cheque, access badge, as well as the identity of its holder by carrying out information processings on the basis of at least one secret message (M) attesting the identity of the holder of the document, characterised in that it consists in making use of a document provided with a special characteristic datum (S), not necessarily secret, having a secret relation with the secret message (M), in introducing into the said first computer (1) the information relating to the secret message (M) and to the special characteristic datum (S) as well as a non-secret item of information (R) remotely transmitted from the said second computer, in performing by means of the said first computer on the basis of at least the said information a mathematical processing whose algorithm is not necessarily secret, the said mathematical processing comprising an encryption (E$_B$) or several encryptions (E$_A$, E$_B$, ...) according to a public-key cryptographic method, using to do this only keys (A', B'...) which are not necessarily secret and of which one at least (B') is conjugate with a secret key (B") of the correspondent, in thus obtaining a modified result (V), in transmitting the modified result (V) to the said second computer, in obtaining on the basis of at least the modified result (V) and the item of information (R) a result (T) by means of appropriate calculations, performed by the said second computer, comprising encryptions (D$_B$, E$_B$, ..) and using at least the secret key (B") of the correspondent and the conjugate key (B'), in verifying that the result (T) comprises a not necessarily secret reference number (F) independent of the document, and in furthermore obtaining on the basis of the result (T) identification information for the said document.

3. Method according to either of Claims 1 and 2, characterised in that a secret message (M) is used, formed from a sequence of characters such as letters, digits, spaces, symbols etc.

4. Method according to any one of Claims 1 to 3, characterised in that a secret message (M) is used which is independent of the identification information written uncoded on the document and which can be chosen by the future holder of the document.

5. Method according to any one of Claims 1 to 4, characterised in that the R.S.A. (Rivest, Shamir and Adleman) system with the following algorithm:
M$^e$ modulo n = C, in which M is the integer number forming the subject of the encryption or a number depending on the latter, in which e and n are integer numbers making up the public key and C is the integer remainder from dividing M$^e$ by n, is used as public-key cryptographic method, and in that the result of the encryption is either the result of this calculation, or a function of the latter, or a function of the result of several calculations performed successively following a similar or different algorithm, the result of a calculation or a function of the latter forming the subject of the following calculation.

6. Method according to Claim 5, characterised in that the exponent used in one or more encryptions is the number 3.

7. Method according to either of Claims 5 and 6, characterised in that the divisor n used in the encryption or in one of them is made up of just two very large prime factors which are each preferably greater than the 200th power of 2.

8. Method according to Claim 1 or any one of Claims 3 to 7, characterised in that there is firstly performed the encryption (E$_A$) of the secret message (M), previously transposed into digital form, in that there is next performed the encryption (E$_B$) of a number, depending on the result of the first encryption (E$_B$) and on the characteristic datum (S) which is provided on the document and is previously transposed into digital form, and in that the correspondence is examined between the result (T) of this mathematical processing and the abovementioned reference number (F).

9. Method according to Claim 1 or any one of Claims 3 to 7, characterised in that there is performed the encryption (E$_B$) of a number, depending on the secret message (M) and on the characteristic datum (S) which is provided on the document, each previously transposed into digital form, and in that the correspondence is examined between the result (T) of this mathematical processing and the abovementioned reference number (F).

10. Method according to Claim 1 or any one of Claims 3 to 7, characterised in that there is performed separately the encryption ($E_B$) of the secret message (M) previously transposed into digital form, and the encryption ($E_B$) of the characteristic datum (S) which is provided on the document and is likewise previously transposed into digital form, in that a number is formed, depending on the results of the encryptions, and in that the correspondence is examined between the result (T) of this mathematical processing and the abovementioned reference number (F).

11. Method according to any one of Claims 8 to 10, characterised in that it consists in using the result (T) of the mathematical processing in the verification by the computer of the expected correspondence with the abovementioned reference number (F) initially written into its memory and in the provision of information by an indicator, such as a LCD display, a printer etc. enabling a third party to verify the expected correspondence with one or more identification inscriptions appearing uncoded on the document.

12. Method according to any one of Claims 8 to 10, characterised in that it consists in using the result (T) of the mathematical processing in the verification by the computer of the expected correspondence with the abovementioned reference number (F) initially written into its memory and in transmitting via a link, such us an electrical, optical link etc. a signal giving the result of the verification and possibly identification information coming from the result of the mathematical processing.

13. Method according to any one of Claims 2 to 7, characterised in that there is firstly performed the encryption ($E_A$) of the secret message (M) previously transposed into digital form, and in that there is next performed the encryption ($E_B$) of a number, depending on the result of the first encryption, of the characteristic datum (S) which is provided on the document and is previously transposed into digital form, and of an item of information transmitted by the correspondent and which is to remotely verify the authenticity of the document and the identity of the holder, and in that the modified result (V) of the mathematical processing is transmitted to this correspondent and in that this correspondent, after performing the appropriate calculations, performs the abovementioned verifications by examining the correspondence between the result (T) of the latter calculations and the abovementioned reference number (F) and by checking on the basis of the abovementioned result (T) the identification data for the document which result therefrom.

14. Method according to any one of Claims 2 to 7, characterised in that there is performed the encryption ($E_B$) of a number, depending on the secret message (M) previously transposed into digital form, of the characteristic datum (S) which is provided on the document, likewise previously transposed into digital form, and of an item of information (R) transmitted by the correspondent and which is to remotely verify the authenticity of the document and the identity of the holder, in that the modified result (V) of the mathematical processing is transmitted to this correspondent, and in that this correspondent, after performing the appropriate calculations, performs the abovementioned verifications by examining the correspondence between the result (T) of the latter calculations and the abovementioned reference number (F) and by checking on the basis of the abovementioned result the identification data for the document which result therefrom.

15. Method according to Claim 13, characterised in that there is performed a second mathematical processing which firstly comprises the encryption ($E_B$) of the secret message (M) previously transposed into digital form, next the encryption ($E_B$) of a number, depending on the result of the first encryption, of the characteristic datum (S) which is provided on the document and is previously transposed into digital form, of the item of information (R) transmitted by the correspondent and of a secret item of information (L), and in that the result (W) of this second mathematical processing is likewise transmitted to this correspondent with a view to transmitting the secret item of information in a form such that only the possessor of the appropriate secret key can take cognisance thereof and be assured of the origin of this item of information.

16. Method according to Claim 14, characterised in that there is performed a second mathematical processing which comprises the encryption ($E_B$) of a number, depending on the secret message (M) previously transposed into digital form, of the characteristic datum (S) which is provided on the document and is likewise previously transposed into digital form, of the item of information (R) transmitted by the correspondent and of a secret item of information (L), and in that the result (W) of this second mathematical processing is likewise transmitted to this correspondent with a view to transmitting the secret item of information in a form such that only the possessor of the appropriate secret key can take cognisance thereof and be assured of the origin of this item of information.

17. Device intended to verify the authenticity of a document associated with a person, such as a credit card, bank card, cheque, access badge, as well as the identity of its holder, comprising on the one hand means allowing the reading of a special characteristic datum (S) for the said document and the introduction by the said holder of a secret message (M) attesting his identity, and on the other hand a computer connected to the said means, this device being characterised in that the said computer comprises:

(1) means configured for performing on the basis of at least the special characteristic datum (S) and the secret message (M), a mathematical processing giving a result (T), the said mathematical processing whose algorithm is not necessarily secret comprising one or more encryptions ($E_A$, $E_B$, ...) according to a public-key cryptographic method and using to do this only keys (A', B', ...) which are not necessarily secret,

(2) means configured for verifying that the result (T) comprises a not necessarily secret reference number (F) independent of the document and

(3) means configured for obtaining on the basis of the result (T) identification information appearing uncoded on the document.

18. Device placed near users comprising on the one hand a first computer configured in order to be connected via a telecommunications network to a second computer of a correspondent allowing remote verification of the authenticity of a document associated with a person, such as a credit card, bank card, cheque, access badge, as well as the identity of its holder, and on the other hand means connected to the said first computer allowing the reading of a special characteristic datum (S) for the said document, the introduction by the said holder of a secret message (M) attesting his identity and the receiving of an item of information (R) transmitted by the said correspondent, this device being characterised in that the said first computer comprises means configured for performing on the basis of at least the special characteristic datum (S), the secret message (M) and the item of information (R), a mathematical processing giving a modified result (V), the said mathematical processing, whose algorithm is not necessarily secret, comprising one or more encryptions ($E_A$, $E_B$, ...) according to a public-key cryptographic method and using to do this only keys (A', B'...) which are not necessarily secret, and of which one at least (B') is conjugate with a secret key (B'') of the correspondent, and means for sending the said modified result (V) via the said telecommunications network to the said second computer, the latter being configured for obtaining on the basis of at least the modified, result (V) and the item of information (R) a result (T) by means of appropriate calculations, comprising encryptions ($D_B$, $E_B$, ...) and using at least the secret key (B'') and the conjugate key (B') for verifying that the result (T) comprises a not necessarily secret reference number (F) independent of the document, and for furthermore obtaining on the basis of the result (T) identification information for the said document.

19. Device according to either of Claims 17 and 18, characterised in that the computer comprises a calculating unit, a memory the content of which cannot be modified, a random-access memory into which information can be introduced and input and output ports, in that the reader is equipped with a magnetic or optical reading head and possibly with a shaping circuit and is connected at least to one input port of the computer, and in that an indicator such as a LCD Liquid-crystal display is provided and connected at least to one output port of the computer possibly by way of a control circuit.

**Patentansprüche**

1. Verfahren, das bestimmt ist zur Überprüfung der Echtheit eines personenbezogenen Dokuments, beispielsweise einer Kreditkarte, einer Bankkarte, eines Schecks, einer Zugangsmarke, sowie der Identität seines Besitzers, wobei eine Informationsverarbeitung anhand wenigstens einer geheimen Nachricht (M), welche die Identität des Besitzers des Dokuments bestätigt, ausgeführt wird,

**dadurch gekennzeichnet, daß**

es darauf beruht, daß es von einem Dokument Gebrauch macht, das mit einem besonderen charakteristischen Merkmal (S) ausgestattet ist, welches nicht notwendigerweise geheim ist, wobei eine geheime Beziehung zur geheimen Nachricht (M) bereitgestellt wird, zum Eingeben der auf die geheime Nachricht (M) und das charakteristische Merkmal (S) bezogenen Informationen in einen Computer, um vermittels des Computers anhand wenigstens dieser Informationen eine mathematische Verarbeitung auszuführen, deren Algorithmus nicht notwendigerweise geheim ist, wobei die mathematische Verarbeitung eine Chiffrierung ($E_B$) oder mehrere Chiffrierungen ($E_A$, $E_B$, ...) gemäß einer Verschlüsselungsmethode mit einem allgemein bekannten Schlüssel umfaßt und sie, um das auszuführen, nur Schlüssel (A', B', ...) benutzt, die nicht notwendigerweise geheim sind, um durch die mathematische Verarbeitung ein Resultat (T) zu erhalten, um zu verifizieren, daß das Resultat (T) eine nicht notwendigerweise geheime und vom Dokument unabhängige Referenzzahl (F) umfaßt, und um außerdem, ausgehend vom Resultat (T) Informationen zur Identifikation zu erhalten, die in Klarschrift auf dem Dokument erscheinen.

2. Verfahren, das dazu bestimmt ist, in einem Telekommunikationsnetz erste, in der Nähe der Benutzer angeordnete Computer mit zweiten Computern von Korrespondenten zu verbinden, um aus der Entfernung die Echtheit eines personenbezogenen Dokuments zu überprüfen, beispielsweise einer Kreditkarte, einer Bankkarte, eines Schecks, einer Zugangsmarke sowie die Identität seines Besitzers, wobei eine Informationsverarbeitung ausgehend von wenigstens einer geheimen Nachricht (M), welche die Identität des Besitzers des Dokuments bestätigt, ausgeführt wird, dadurch gekennzeichnet, daß es darauf beruht, daß es von einem Dokument Gebrauch macht, das mit einem besonderen charakteristischen, nicht notwendigerweise geheimen Merkmal (S) versehen ist, wobei eine geheime Beziehung mit der geheimen Nachricht (M) bereitgestellt wird zum Eingeben der auf die geheime Nachricht (M) und das charakteristische Merkmal (S) bezogenen Informationen, sowie eine nichtgeheime Information (R) in den ersten Computer und um aus der Entfernung an einen zweiten Computer zu übertragen, um vermittels des ersten Computers anhand wenigstens dieser Informationen eine mathematische Verarbeitung auszuführen, deren Algorithmus nicht notwendigerweise geheim ist, wobei die mathematische Verarbeitung eine Chiffrierung ($E_B$) oder mehrere Chiffrierungen ($E_A$, $E_B$, ...) gemäß einer Verschlüsselungsmethode mit einem allgemein bekannten Schlüssel umfaßt, und sie, um das auszuführen, nur Schlüssel (A', B', ...) benutzt, die nicht notwendigerweise geheim sind und von denen wenigstens einer (B') zu einem geheimen Schlüssel (B") des Korrespondenten konjugiert ist, um auf diese Weise ein modifiziertes Resultat (V) zu erhalten, um das modifizierte Resultat (V) dem zweiten Computer zu übermitteln, um anhand wenigstens des modifizierten Resultats (V) und der Information (R) ein Resultat (T) mittels geeigneter, vom zweiten Computer ausgeführter Rechnungen zu erhalten, die Chiffrierungen ($D_B$, $E_B$, ...) umfassen und wenigstens den geheimen Schlüssel (B") des Korrespondenten und den konjugierten Schlüssel (B') benutzen, um zu überprüfen, daß das Resultat (T) eine, nicht notwendigerweise geheime und vom Dokument unabhängige Referenzzahl (F) umfaßt, und um außerdem ausgehend vom Resultat (T) Informationen zur Identifikation des Dokuments zu erhalten.

3. Verfahren nach dem einen oder anderen der Ansprüche 1 und 2, dadurch gekennzeichnet, daß man eine geheime Nachricht (M) benutzt, die eine Folge von Zeichen z. B. Buchstaben, Ziffern, Freiräumen, Symbolen etc. ... bildet.

4. Verfahren nach irgendeinem der Ansprüche 1 bis 3, dadurch gekennzeichnet, daß man eine geheime Nachricht (M) benutzt, die unabhängig von den in Klarschrift auf dem Dokument eingeschriebenen Informationen zur Identifikation ist und die von dem zukünftigen Besitzer des Dokuments gewählt werden kann.

5. Verfahren nach irgendeinem der Ansprüche 1 bis 4, dadurch gekennzeichnet, daß man als Verschlüsselungsmethode nach einem allgemein bekannten Schlüssel das System R.S.A. (Rivest, Shamir und Adleman) mit folgendem Algorithmus benutzt:

$$M^e \text{ modulo } n = C,$$

wobei M die ganze Zahl, die das chiffrierte Objekt bildet oder eine Zahl als Funktion von diesem ist, wobei e und n ganze Zahlen sind, die den allgemein bekannten Schlüssel bilden und C der ganzzahlige Rest der Division von $M^e$ durch n ist, und daß das Resultat der Chiffrierung das Resultat dieser Rechnung ist oder eine Funktion dieser oder eine Funktion von mehreren, nacheinander in Folge nach einem ähnlichen oder unterschiedlichen Algorithmus ausgeführten Rechnung, wobei das Resultat einer Rechnung oder einer Funktion dieser den Gegenstand der folgenden Rechnung bildet.

6. Verfahren nach Anspruch 5, dadurch gekennzeichnet, daß der in einer oder mehreren Chiffrierungen benutzte Exponent die Zahl 3 ist.

7. Verfahren nach dem einen oder anderen der Ansprüche 5 und 6, dadurch gekennzeichnet, daß der Divisor n, der in der Chiffrierung oder in einer dieser nur aus zwei, ursprünglich sehr großen Faktoren zusammengesetzt ist, deren jeder vorzugsweise größer als die 200. Potenz ist.

8. Verfahren nach Anspruch 1 oder irgendeinem der Ansprüche 3 bis 7, dadurch gekennzeichnet, daß man zunächst die Chiffrierung ($E_A$) der geheimen, zuvor auf eine numerische Gestalt gebrachten Nachricht (M) ausführt, daß daraufhin die Chiffrierung ($E_B$) einer Zahl, einer Funktion des Resultats der ersten Chiffrierung und des charakteristischen Merkmals, die auf dem Dokument vorgesehen und zuvor auf eine numerische Gestalt gebracht worden sind, ausgeführt wird, und daß die Übereinstimmung zwischen dem Resultat (T) dieser mathematischen Verarbeitung und der vorgegebenen Referenzzahl (F) überprüft wird.

9. Verfahren nach Anspruch 1 oder irgendeinem der Ansprüche 3 bis 7, dadurch gekennzeichnet, daß man die Chiffrierung ($E_B$) einer Zahl, einer Funktion der geheimen Nachricht und des charakteristischen, auf dem Dokument vorgesehenen Merkmals (S) ausführt, die jeweils zuvor in eine numerische Gestalt überführt wurden, und daß man die Übereinstimmung zwischen dem Resultat (T) der mathematischen Verarbeitung und der vorerwähnten Referenzzahl (F) überprüft.

10. Verfahren nach Anspruch 1 oder irgendeinem der Ansprüche 3 bis 7, dadurch gekennzeichnet, daß man die Chiffrierung ($E_B$) der geheimen, zuvor in eine numerische Gestalt überführten Nachricht (M) für sich und die Chiffrierung ($E_B$) des charakteristischen, auf dem Dokument vorgesehenen Merkmals (S), die zuvor in gleicher Weise in eine numerische Gestalt überführt wurden, ausführt, daß man eine Zahl, eine Funktion der Resultate der Chiffrierung bildet und daß man die Übereinstimmung zwischen dem Resultat (T) der mathematischen Verarbeitung und der vorerwähnten Referenzzahl (F) überprüft.

11. Verfahren nach irgendeinem der Ansprüche 8 bis 10, dadurch gekennzeichnet, daß es besteht aus dem Benutzen des Resultats (T) der mathematischen Verarbeitung zur Überprüfung der erwarteten Übereinstimmung mit der vorerwähnten Referenzzahl durch den Computer, die am Anfang in den Speicher dieses eingeschrieben wurde, und aus der Lieferung der Informationen durch eine Anzeige, z. B. eine LCD-Anzeige, ein Aufdruck, etc., die es einem Dritten ermöglicht, die erwartete Übereinstimmung mit diesen oder mehreren Aufschriften zur Identifikation, die in Klarschrift auf dem Dokument dargestellt sind, durchzuführen.

12. Verfahren nach irgendeinem der Ansprüche 8 bis 10, dadurch gekennzeichnet, daß es besteht aus dem Benutzen des Resultats (T) der mathematischen Verarbeitung zur Überprüfung der erwarteten Übereinstimmung mit der vorerwähnten Referenzzahl durch den Computer, die am Anfang in den Speicher dieses eingeschrieben wurde, und aus dem Übermitteln eines Signals durch eine Verbindung, z. B. eine elektrische, optische, etc. Verbindung, welche das Resultat der Überprüfung angibt sowie eventuell Informationen zur Identifikation, die vom Resultat der mathematischen Verarbeitung herrühren.

13. Verfahren nach irgendeinem der Ansprüche 2 bis 7, dadurch gekennzeichnet, daß man zunächst die Chiffrierung ($E_A$) der geheimen Nachricht (M), die zuvor auf eine numerische Gestalt umgesetzt wurde, ausführt, daß man daraufhin die Chiffrierung ($E_B$) einer Zahl, Funktion des Resultats der ersten Chiffrierung, des auf dem Dokument vorgesehenen, charakteristischen Merkmals (S), die zuvor in eine numerische Gestalt überführt wurden, ausführt und einer durch den Korrespondenten übermittelten Information angesichts der Überprüfung der Echtheit des Dokuments und der Identität des Besitzers aus der Entfernung, daß man an diesen Korrespondenten das modifizierte Resultat (V) der mathematischen Verarbeitung übermittelt, und daß dieser Korrespondent, nachdem die geeigneten Rechnungen ausgeführt wurden, die obengenannten Überprüfungen ausführt, wobei die Übereinstimmung zwischen dem Resultat (T) letzterer Rechnungen und der vorerwähnten Referenzzahl (F) geprüft wird, und wobei, ausgehend von diesem Resultat (T), die Identifikationsmerkmale des Dokuments, die sich daraus ergeben, kontrolliert werden.

**14.** Verfahren nach irgendeinem der Ansprüche 2 bis 7, dadurch gekennzeichnet, daß man ausführt: Die Chiffrierung ($E_B$) einer Zahl, Funktion der geheimen, zuvor in eine numerische Gestalt umgesetzten Nachricht (M), des charakteristischen, auf dem Dokument vorgesehenen Merkmals (S), das auf gleiche Weise zuvor in eine numerische Gestalt umgesetzt wurde, und die Chiffrierung einer vom Korrespondenten übermittelten Information angesichts der Überprüfung der Echtheit des Dokuments und der Identität des Besitzers aus der Entfernung, daß man an diesen Korrespondenten das modifizierte Resultat (V) der mathematischen Verarbeitung übermittelt und daß dieser Korrespondent, nachdem er die geeigneten Rechnungen ausgeführt hat, die obengenannten Überprüfungen ausführt, wobei die Übereinstimmung zwischen dem Resultat (T) dieser letzten Rechnung und der vorerwähnten Referenzzahl (F) geprüft werden und wobei ausgehend von diesem Resultat (T) die Identifikationsmerkmale des Dokumentes, die sich daraus ergeben, kontrolliert werden.

**15.** Verfahren nach dem Anspruch 13, dadurch gekennzeichnet, daß man eine zweite mathematische Verarbeitung ausführt, die umfaßt: Zunächst die Chiffrierung ($E_B$) einer geheimen, zuvor in eine numerische Gestalt umgesetzten Nachricht (M), daraufhin die Chiffrierung ($E_B$) einer Zahl, einer Funktion des Resultats der ersten Chiffrierung, des charakteristischen, auf dem Dokument vorgesehenen Merkmals (S), das zuvor in eine numerische Gestalt überführt wurde, der Information (R), die von dem Korrespondenten übermittelt wurde, und einer geheimen Information (L) und daß man an diesen Korrespondenten in gleicher Weise das Resultat (W) dieser zweiten mathematischen Verarbeitung übermittelt, wobei die Übermittlung der geheimen Information in einer Form geschieht, daß lediglich der Besitzer des geheimen Schlüssels davon Kenntnis hat und sich über die Herkunft dieser Information sicher ist.

**16.** Verfahren nach Anspruch 14, dadurch gekennzeichnet, daß man eine zweite mathematische Verarbeitung ausführt, welche die Chiffrierung ($E_B$) einer Zahl, einer Funktion der geheimen Nachricht (M) umfaßt, die zuvor in eine numerische Form umgesetzt wurde, ferner die Chiffrierung des charakteristischen, auf dem Dokument vorgesehenen Merkmals (S), das in gleicher Weise vorher in eine numerische Gestalt umgesetzt wurde, der vom Korrespondenten übermittelten Information (R) und einer geheimen Information (L) und daß man in gleicher Weise an diesen Korrespondenten das Resultat (W) dieser zweiten mathematischen Verarbeitung übermittelt, wobei die Übermittlung der geheimen Information in einer Form geschieht, daß lediglich der Besitzer des geheimen Schlüssels davon Kenntnis hat und sich über die Herkunft dieser Information sicher ist.

**17.** Vorrichtung zur Überprüfung der Echtheit eines personenbezogenen Dokuments, z. B. einer Kreditkarte, einer Bankkarte, eines Schecks, einer Zugangsmarke, sowie der Identität seines Besitzers, die umfaßt: Auf der einen Seite Mittel, die das Lesen eines besonderen charakteristischen Merkmals (S) dieses Dokuments und die Eingabe einer geheimen Nachricht (M) durch den Besitzer, die seine Identität beweisen, und auf der anderen Seite eine Rechenanlage, die mit den genannten Mitteln verbunden ist, wobei diese Vorrichtung dadurch gekennzeichnet ist, daß die Rechenanlage umfaßt:

(1) Einrichtungen zum Ausführen einer mathematischen Bearbeitung, ausgehend von wenigstens dem besonderen charakteristischen Merkmal (S) und der geheimen Nachricht (M), die ein Resultat (T) ergeben, wobei die mathematische Verarbeitung, deren Algorithmus nicht notwendigerweise geheim ist, eine oder mehrere Chiffrierungen ($E_A$, $E_B$, ...) gemäß einer Verschlüsselungsmethode nach einem allgemein bekannten Schlüssel umfaßt und, um das auszuführen, nur Schlüssel (A', B', ...) benutzt, die nicht notwendigerweise geheim sind,

(2) Mittel, die ausgestattet sind zum Überprüfen, ob das Resultat (T) eine Referenzzahl (F) umfaßt, die nicht notwendigerweise geheim und unabhängig vom Dokument ist und

(3) Mittel, die angeordnet sind, um ausgehend vom Resultat (T) Informationen zur Identifikation, die in Klarschrift auf dem Dokument erscheinen, zu erhalten.

**18.** Vorrichtung, welche in der Nähe der Benutzer plaziert wird, die umfaßt: Einerseits einen ersten Computer, der dafür eingerichtet ist, über ein Telekommunikationsnetz mit einem zweiten Computer eines Korrespondenten verbunden zu sein, der es ermöglicht, aus der Entfernung die Echtheit eines personenbezogenen Dokuments, z. B. einer Kreditkarte, einer Bankkarte, eines Schecks, einer Zugangsmarke, sowie der Identität seines Benutzers zu überprüfen, und andererseits Mittel, die mit dem ersten Computer verbunden sind und das Lesen eines besonderen, charakteristischen Merkmals (S) dieses Dokuments, die Eingabe einer geheimen Nachricht durch den Benutzer, die seine Identität bestätigen, und die Aufnahme einer vom obengenannten Korrespondenten übermittelten Information (R) ermöglichen, wobei diese Vorrichtung dadurch gekennzeichnet ist, daß der erste Computer umfaßt: Mittel, die ausgebildet sind, um ausgehend von wenigstens einem besonderen charakteristischen Merkmal (S), der geheimen Nachricht (M) und der Information (R) eine mathematische Verarbeitung auszuführen, die ein modifiziertes Resultat (V) ergibt, wobei diese mathematische Verarbeitung, deren Algorithmus nicht notwendigerweise geheim ist, eine oder mehrere Chiffrierungen ($E_A$, $E_B$, ...) gemäß einer Verschlüsselungsmethode mit einem allgemein bekannten Schlüssel umfaßt und, um das auszuführen, nur Schlüssel (A', B', ...), benutzt, die nicht notwendigerweise geheim sind, und deren wenigstens einer (B') zu einem geheimen Schlüssel (B") des Korrespondenten konjugiert ist, und Mittel, um das modifizierte Resultat (V) über das Telekommunikationsnetz zum zweiten Computer zu senden, wobei dieser letztere ausgebildet ist, um ausgehend von wenigstens dem modifizierten Resultat (V) und der Information (R) ein Resultat (T) vermittels geeigneter Rechnungen zu erhalten, die Chiffrierungen ($D_B$, $E_B$, ...) umfassen und wenigstens den geheimen Schlüssel (B") und den konjugierten Schlüssel (B') benutzen, um zu überprüfen, daß das Resultat (T) eine Referenzzahl (F) umfaßt, die nicht notwendigerweise geheim und vom Dokument unabhängig ist, und um außerdem ausgehend vom Resultat (T) Informationen zur Identifikation des Dokuments zu erhalten.

19. Vorrichtung nach dem einen oder dem anderen der Ansprüche 17 und 18, dadurch gekennzeichnet, daß der Computer eine Recheneinheit, einen Speicher, dessen Inhalt nicht geändert werden kann, einen lebenden Speicher, in den Informationen eingegeben werden können und Eingänge und Ausgänge umfaßt, daß der Leser mit einem Magnetlesekopf oder einem optischen Lesekopf und eventuell mit einer Schaltung zur Informsetzung versehen ist, und daß er mit wenigstens einem Eingang des Computers verbunden ist, und daß eine Anzeige, beispielsweise eine Flüssigkristallanzeige LCD, vorgesehen ist, und mit wenigstens einem Ausgang des Computers, eventuell durch eine Steuerschaltung verbunden ist.

62    61    41    62

41

62

3

5    2    Fig.1.

Fig.2.

Fig.3.

Fig.4.

Fig.5.

EP 0 229 006 B1

Fig.6.

Fig.7.